# EUROPEAN PATENT SPECIFICATION

(11) **EP 4 379 947 B1**
(45) Date of publication and mention of the grant of the patent: **08.04.2026**
(21) Application number: 23855100.6
(22) Date of filing: 10.08.2023
(51) Int. Cl.: H01M 50/59, H01M 50/588, H01M 50/502, H01M 10/42, H01M 50/522, H01M 50/204, H01M 50/503, A62C 3/16, H01M 50/383

(54) **INTER-MODULE BUSBAR INCLUDING FIRE-EXTINGUISHING LIQUID**
SAMMELSCHIENE ZWISCHEN MODULEN MIT FEUERLÖSCHFLÜSSIGKEIT
BARRE OMNIBUS INTER-MODULES COMPRENANT UN LIQUIDE D'EXTINCTION D'INCENDIE

(30) Priority: 16.08.2022 KR 20220101747
(43) Date of publication of application: 05.06.2024
(73) Proprietor: LG Energy Solution, Ltd., Seoul 07335 (KR)
(72) Inventor: HWANG, Sung Tack, Daejeon 34122 (KR); LEE, Won Tae, Daejeon 34122 (KR); OH, Kyu Hwan, Daejeon 34122 (KR)
(74) Representative: Plasseraud IP
(86) International application number: PCT/KR2023/011798
(87) International publication number: WO 2024/039133

(56) References cited:
- EP-A1- 4 024 601
- WO-A1-2021/213780
- CN-U- 202 210 426
- CN-U- 202 210 664
- CN-U- 216 597 908
- DE-A1- 102017 004 723
- KR-A- 20210 042 480
- KR-A- 20210 050 983
- KR-A- 20210 141 095
- US-A1- 2014 170 447
- US-A1- 2022 166 114

## Description

### [Technical Field]

This application claims the benefit of priority to Korean Patent Application No. 2022-0101747 filed on August 16, 2022.

The present invention relates to an inter-module busbar configured to connect battery modules to each other, and more particularly to an inter-module busbar having a structure of an insulator configured to protect a metal bar made of an electrically conductive metal material from the outside and a structure including an extinguishing liquid capable of extinguishing fire in the event of the fire.

### [Background Art]

With recent development of alternative energies due to air pollution and energy depletion caused as the result of use of fossil fuels, demand for secondary batteries capable of storing electrical energy that is produced has increased. Secondary batteries, which are capable of being charged and discharged, are intimately used in daily life. For example, secondary batteries are used in mobile devices, electric vehicles, and hybrid electric vehicles.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle, etc.

Meanwhile, a busbar is widely used as a means for electrical connection between the battery modules, and is useful as a large current conduction means since the busbar is capable of allowing large current to stably flow therethrough even with a relatively small thickness compared to a cable.

In general, the busbar may be provided in the form of a metal bar, such as copper or aluminum, which exhibits excellent electrical conductivity, and the remaining part of the metal bar, excluding opposite ends connected to terminals, is covered with a tube or an injection-molded product for safety.

When fire breaks out in the battery pack, however, the tube or the injection-molded product may be burned away, whereby the metal bar may be exposed to the outside and may come into contact with a surrounding metal object, and therefore short circuit may occur.

In addition, there is no way to actively respond to flames using only a heat-resistant busbar that is resistant to fire.

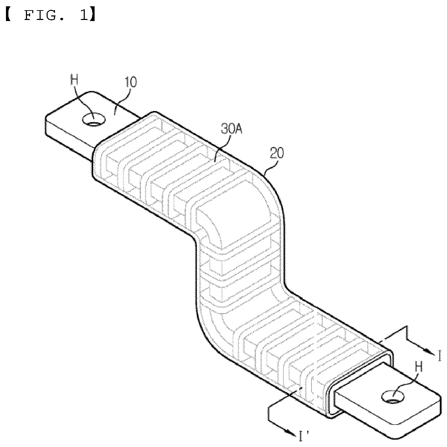

In order to solve this problem, the following document (Patent Document 1) discloses a bandage means for preventing contact between a metal bar and a surrounding metal object through the provision of an insulating tube 20 configured to enclose an annular or band-shaped metal wire obtained by coating the remaining part of the metal bar 10, excluding opposite ends thereof, with a material having insulation and fire-resistant properties and a bandage member 30A, as shown in FIG. 1. However, only a structure to prevent electrical short circuit in the event of fire is disposed, and a fundamental extinguishing means capable of extinguishing fire is neither disclosed nor implied. Another document (Patent Document 2) describes an insulated water-cooling electric conduction bar. Another document (Patent Document 3) describes a water-cooled co-phase counter parallel connection busbar.

### (Prior Art Documents)

Patent Document 1: Korean Patent Application Publication No. 2021-0141095
Patent Document 2: Chinese Utility Model Application CN 202210426 U
Patent Document 3: Chinese Utility Model Application CN 202210664 U

### [Disclosure]

### [Technical Problem]

The present invention has been made in view of the above problems, and it is an object of the present invention to provide an inter-module busbar having an extinguishing liquid provided in an insulator configured to surround a metal bar, wherein the extinguishing liquid leaks to directly extinguish flames in the event of fire.

### [Technical Solution]

An inter-module busbar according to the present invention to accomplish the above object is defined according to claim 1.

Also, in the inter-module busbar according to the present invention, the insulator may be provided with a metal bar insertion hole, and one or more of the insulators may be fitted onto the metal bar in a longitudinal direction of the metal bar.

Also, in the inter-module busbar according to the present invention, a plurality of insulators fitted on the metal bar may be fixed to each other by adhesion using an adhesive.

Also, in the inter-module busbar according to the present invention, the space into which the extinguishing liquid is to be injected may be formed between a first insulation layer in tight contact with the metal bar and a second insulation layer in tight contact with the outer insulation portion.

Also, in the inter-module busbar according to the present invention, the space into which the extinguishing liquid is to be injected may surround an entirety of the metal bar.

Also, in the inter-module busbar according to the present invention, the inner insulation portion may further include a first injection hole configured to allow the extinguishing liquid to be injected therethrough and a first sealing cap configured to seal the first injection hole.

Also, in the inter-module busbar according to the present invention, the inner insulation portion may be provided with a first injection hole configured to allow the extinguishing liquid to be injected therethrough, the outer insulation portion may further include a second injection hole configured to communicate with the first injection hole, and the inter-module busbar may further include a second sealing cap configured to seal the first injection hole and the second injection hole.

Also, in the inter-module busbar according to the present invention, the first insulation layer may be thicker than the second insulation layer.

Also, in the inter-module busbar according to the present invention, the outer insulation portion may be configured to enclose the outer surface of the inner insulation portion including the side surface of the inner insulation portion.

Also, in the inter-module busbar according to the present invention, the inner insulation portion may be made of an expandable heat-resistant silicone material.

Also, in the inter-module busbar according to the present invention, the outer insulation portion may be made of a heat-resistant silicone material configured to be ceramized by heat.

Also, in the inter-module busbar according to the present invention, the extinguishing liquid may be an insulative material.

### [Advantageous Effects]

As is apparent from the above description, an inter-module busbar according to the present invention has an advantage in that an extinguishing liquid is included in the busbar, and the extinguishing liquid leaks in the event of fire, whereby it is possible to early extinguish the fire.

In addition, the inter-module busbar according to the present invention has a merit in that the insulator configured to protect the busbar from external impact or to prevent electrical contact of the busbar is manufactured in block units such that insulator can be fitted onto a metal bar so as to cover the entire length of the metal bar, whereby it is possible to reduce the manufacturing cost of the busbar and to simplify the manufacturing process.

Furthermore, in the inter-module busbar according to the present invention, different extinguishing liquids may be injected into the busbar depending on the cause and type of fire, whereby it is possible to effectively deal with various fire causes and environments.

### [Description of Drawings]

FIG. 1 is a sectional view of a conventional inter-module busbar.
FIG. 2 is an exploded perspective view of an inter-module busbar according to a first preferred embodiment of the present invention.
FIG. 3 is an assembled perspective view of FIG. 2.
FIG. 4 is a perspective view of the inter-module busbar according to the first preferred embodiment of the present invention.
FIG. 5 is a vertical sectional view of an insulator according to a first preferred embodiment of the present invention, taken along line J-J.
FIG. 6 is a vertical sectional view of the insulator according to the first preferred embodiment of the present invention, taken along line K-K.
FIG. 7 is a perspective view of an inter-module busbar according to a second preferred embodiment of the present invention.
FIG. 8 is a vertical sectional view of an insulator according to a second preferred embodiment of the present invention, taken along line K-K.
FIG. 9 is a vertical sectional view of an insulator according to a third preferred embodiment of the present invention, taken along line K-K.
FIG. 10 is a vertical sectional view of an insulator according to a fourth preferred embodiment of the present invention, taken along line K-K.
FIG. 11 is a sectional view showing deformation of an inter-module busbar according to a preferred embodiment of the present invention due to fire under the inter-module busbar.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, an inter-module busbar according to the present invention will be described in detail with reference to the accompanying drawings.

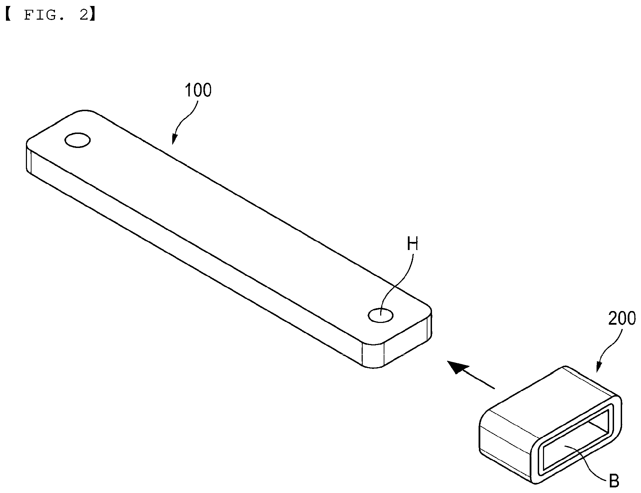

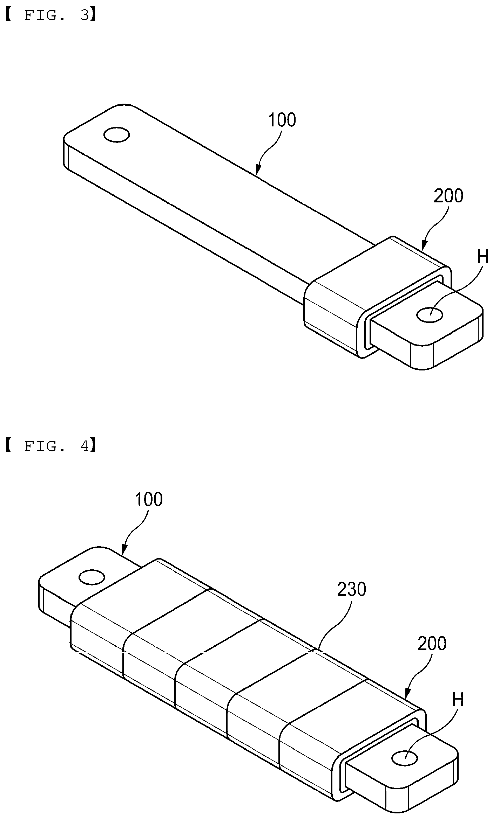

FIG. 2 is an exploded perspective view of an inter-module busbar according to a first preferred embodiment of the present invention, FIG. 3 is a view showing an example of assembly of the exploded perspective view of FIG. 2, and FIG. 4 is a perspective view of the inter-module busbar according to the first preferred embodiment of the present invention.

Referring to FIGs. 2 to 4, the inter-module busbar according to the present invention includes a metal bar 100 having fastening holes H formed in opposite ends in order to connect battery modules to each other, the metal bar being made of an electrically conductive metal material, and an insulator 200 fitted and located on a part of the metal bar 100 excluding the opposite ends thereof.

One end of the metal bar 100, which is one of opposite ends of the metal bar, may be connected to a (+) terminal of one battery module, and the other end of the metal bar may be connected to a (-) terminal of another battery module. For example, each of the terminals of the battery modules may be configured in a bolt form such that the terminals are inserted into holes H provided in opposite ends of the metal bar 100 and are then tightened with nuts, whereby connection parts are securely fixed.

In addition, the thickness and the width of the metal bar may be set based on the magnitude of current that flows through the metal bar, and the metal bar may be variously manufactured depending on the installation location or installation conditions.

Meanwhile, the insulator 200 is configured in a structure that encloses the outside of the metal bar 100, and serves to protect the metal bar 100 while maintaining electrical insulation.

Referring to FIGs. 2 and 3, the insulator 200 is provided with a metal bar 100 insertion space B, and is fitted onto the metal bar 100 in a longitudinal direction of the metal bar 100. The insulator 200 is configured in the form of a unit block for easy fitting onto the metal bar 100, which has an advantage in that the number of insulators 200 to be fitted onto the metal bar 100 may be flexibly adjusted depending on the length of the metal bar.

FIG. 4 shows an example in which a plurality of insulators 200 is fitted on the metal bar 100 over the entire length thereof.

The metal bar 100 may have various sizes and lengths, and each time the busbar needs to be newly designed and manufactured. However, the insulator 200 of the present invention may be further fitted onto the metal bar 100 within the length thereof, and the shape and the size of the metal bar insertion space B of the insulator 200 may be changed, whereby it is possible to effectively manufacture busbars of various sizes.

As shown in FIG. 4, the fitted insulators 200 may be fixed to each other in tight contact with each other via an adhesive 230 in areas adjacent to each other, whereby it is possible to prevent movement or deformation of the insulators.

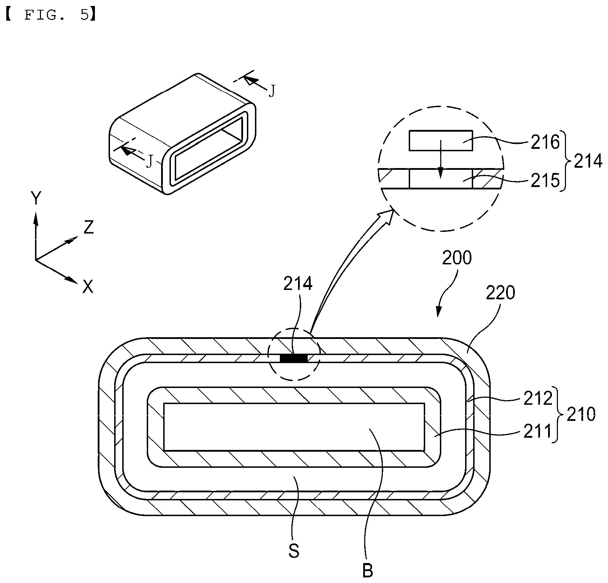

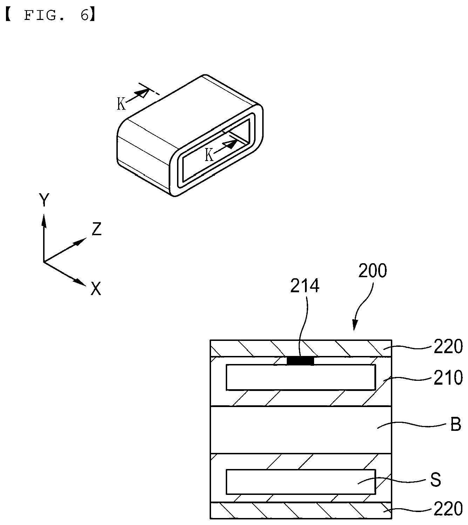

Hereinafter, the internal structure of the insulator 200 will be described in detail with reference to FIGs. 5 and 6.

FIG. 5 is a vertical sectional view of an insulator 200 according to a first preferred embodiment of the present invention, taken along line J-J, and FIG. 6 is a vertical sectional view of the insulator 200, taken along line K-K.

Referring to FIGs. 5 and 6, the insulator 200 includes a metal bar 100 insertion hole B, an inner insulation portion 210 configured to surround the metal bar, and an outer insulation portion 220 configured to surround the inner insulation portion 210.

The inner insulation portion 210 is configured in a donut-shaped structure, and includes a first insulation layer 211, which is an inner surface configured to enclose the metal bar insertion space B, an extinguishing liquid injection space S formed so as to surround the metal bar, and a second insulation layer 212, which is an outer surface.

In addition, the first insulation layer 211 and the second insulation layer 212 appear to be separated from each other in FIG. 5, but are substantially integrated into one, as shown in FIG. 6.

Here, the first insulation layer 211 and the second insulation layer 212 may be formed so as to have the same thickness, but the second insulation layer 212 may be formed so as to be thinner than the first insulation layer 211 in order to keep the metal bar insertion space B stable and to facilitate leakage of an extinguishing liquid to the outside when flames are generated, which will be described later.

The second insulation layer 212 has a first injection portion 214 including a first injection hole 215 configured to allow the extinguishing liquid to be injected therethrough and a first sealing cap 216 configured to seal the first injection hole 215, and the extinguishing liquid 213 may be injected through the first injection hole 215. After the extinguishing liquid is injected, the first injection hole is sealed by the first sealing cap 216, whereby leakage of the extinguishing liquid to the outside is prevented.

Here, the size and the shape of the first injection hole are not particularly limited and may be adjusted in consideration of injection efficiency of the extinguishing liquid. For example, the shape of the first injection hole may be polygonal, such as circular, oval, triangular, or quadrangular, or amorphous.

Meanwhile, it is obvious that each of the first insulation layer 211 and the second insulation layer 212 constituting the inner insulation portion 210 must be made of a material capable of storing the extinguishing liquid for a long time. Preferably, there are no particular restrictions as long as an expandable flame retardant silicone material that exhibits chemical resistance and that expands and melts such that the extinguishing liquid is easily exposed to the outside when the temperature thereof increases to a certain level or higher by flames is used.

The outer insulation portion 220 is configured in a structure that encloses the outer surface of the inner insulation portion 210, and is formed so as to surround the outer surface of the inner insulation portion 210 excluding opposite side surfaces thereof, as shown in FIGs. 5 and 6, in the first embodiment of the present invention.

In addition, the material for the outer insulation portion 220 is not particularly restricted as long as refractory silicone, which is ceramized when exposed to flames, whereby small cracks are formed, is preferably used.

As an example, ceramized refractory silicone exhibits the performance of a general silicone resin at room temperature, but at high temperatures, the structure of refractory silicone is changed to a ceramized structure, whereby refractory silicone has ceramic properties, and therefore ceramized refractory silicone may withstand impact while maintaining certain strength.

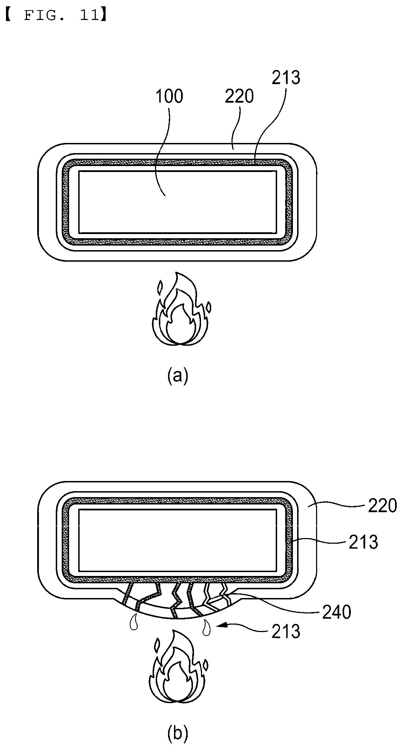

Change in shape of the insulator 200 due to flames will be described later in detail with reference to FIG. 11.

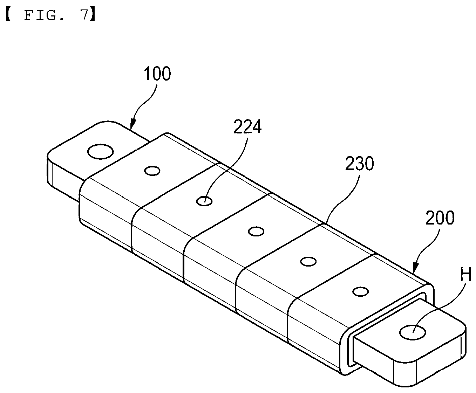

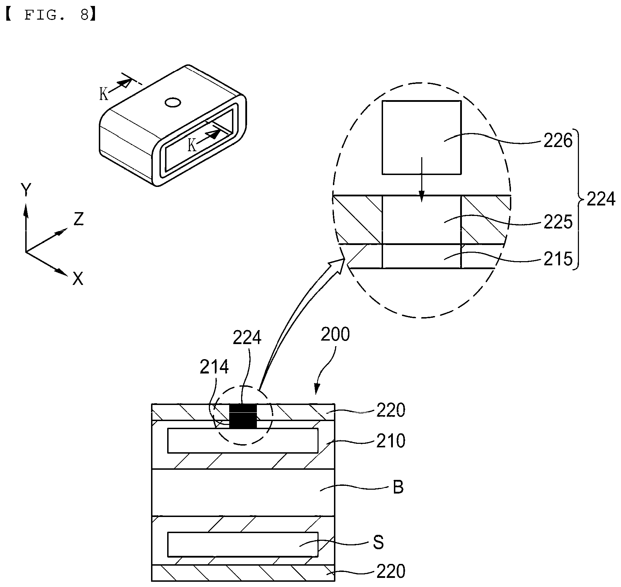

FIG. 7 is a perspective view of an inter-module busbar according to a second preferred embodiment of the present invention, and FIG. 8 is a vertical sectional view of an insulator 200 according to a second preferred embodiment of the present invention, taken along line K-K.

Since, in the first embodiment described above, the extinguishing liquid is injected into the inner insulation portion 210, sealing is performed by the first sealing cap, and the outer insulation portion 220 is provided, no additional extinguishing liquid can be injected, as shown in FIG. 4.

In contrast, as shown in FIGs. 7 and 8, the inter-module busbar according to the second embodiment of the present invention includes a second injection portion 224 configured such that a first injection hole 215 provided in an inner insulation portion and a second injection hole 225 provided in an outer insulation portion 220 communicate with each other in order to inject an extinguishing liquid and such that the first injection hole 215 and the second injection hole 225 are sealed by a second sealing cap 226.

Particularly, in the second embodiment, the inner insulation portion 210 and the outer insulation portion 220 may be manufactured without the provision of an extinguishing liquid injection space, and then the second injection portion 224 may be formed through a subsequent process, whereby a work process may be relatively simplified, compared to the first embodiment. Furthermore, it is possible to manufacture the insulator 200 without injecting the extinguishing liquid and to selectively inject the extinguishing liquid through the second injection portion 224 depending on future use.

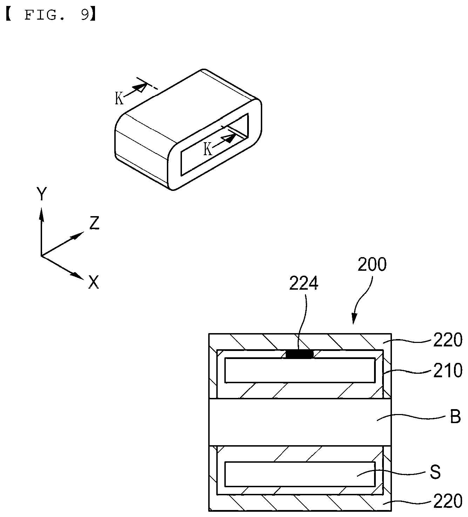

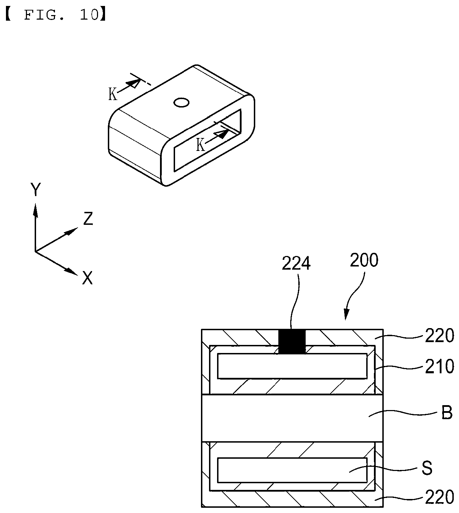

FIG. 9 is a vertical sectional view of an insulator 200 according to a third preferred embodiment of the present invention, taken along line K-K, and FIG. 10 is a vertical sectional view of an insulator 200 according to a fourth preferred embodiment of the present invention, taken along line K-K.

As shown in FIGs. 9 and 10, the insulator 200 is configured in a structure in which an outer insulation portion 220 encloses the entirety of an outer surface of an inner insulation portion 210, including a side surface thereof (but excluding an inner surface of a metal bar insertion space B).

The third embodiment of FIG. 9 is a modification of the first embodiment, in which the first injection portion 214 is provided at only the inner insulation portion 210, and the fourth embodiment of FIG. 10 is a modification of the second embodiment, in which the second injection portion 224 is provided.

Particularly, in the first and second embodiments, when the busbar is configured using only one insulator 200, the side surface of the inner insulation portion 210 may be directly exposed to flames, or even when a gap is formed between adjacent insulators 200 connected to each other via the adhesive 230, the insulators may be exposed to flames, which is prevented in the third and fourth embodiments.

FIG. 11 is a sectional view showing deformation of an inter-module busbar according to a preferred embodiment of the present invention due to fire under the inter-module busbar.

In general, when fire breaks out in a battery pack, a lot of heat and flames may be generated, whereby an insulation portion provided at an inter-module busbar may be burned away, and therefore electrical short circuit to a peripheral portion may occur. In particular, electrical short circuit may form an electrical closed circuit in the battery pack, whereby thermal runaway may be accelerated in the pack.

As shown in FIG. 11, (a) of FIG. 11 shows the shape of the inter-module busbar, which connects battery modules to each other, before deformation when flames are generated under the busbar, and (b) of FIG. 11 shows the deformed shape of the busbar after a certain period of time has elapsed since the flames occurred.

Referring to (b) of FIG. 11, when the flames are generated and the temperature increases to a certain temperature or higher, the surface of the outer insulation portion 220, which forms the outside of the insulator 200, is ceramized. At the same time, the inner insulation portion 210 applies pressure to the ceramized outer insulation portion 220 which expanding due to heating, whereby cracks 240 are formed in a lower surface of the outer insulation portion 220.

The inner insulation portion 210, which receives heat through the cracks 240, may melt, and the extinguishing liquid 213 therein may flow out through the cracks in the outer insulation portion 220, whereby it is possible to early extinguish the flames.

In general, fire extinguishment is divided into physical extinguishment (removal or blockage of oxygen sources, ignition energy, combustibles, etc.) and chemical extinguishment, which inhibits chain reaction of combustion through chemical control. Since the object of the present invention is to extinguish fire in a sealed battery pack, the extinguishing liquid 213 in the present invention preferably exhibits the property of insulation, and a halogenated compound extinguishing liquid, which corresponds to chemical extinguishment using a negative catalyst effect to extinguish fire by inhibiting chain reaction caused by the fire, may be used.

However, various busbars may be used depending on the use, and in addition there are various causes of fire, and therefore the type of the extinguishing liquid 213 is not limited, since the extinguishing liquid 213 may be readily employed by those skilled in the art.

Hereinafter, a process of manufacturing the inter-module busbar according to the first embodiment of the present invention will be described.

First, a method of manufacturing an insulator 200 includes a first step of manufacturing an inner insulation portion 210 including a first insulation layer 211, a second insulation layer 212, and a first injection hole 215 using a method such as injection, a second step of injecting an extinguishing liquid 213 through the first injection hole 215, a third step of performing sealing using first sealing cap 216 to prevent leakage of the extinguishing liquid 213 when injection of the extinguishing liquid 213 is completed, and a fourth step of forming an outer insulation portion 220 configured to enclose the inner insulation portion 210.

In addition, the method further includes a fifth step of fitting a plurality of insulators 200 thus manufactured onto a metal bar 100 so as to cover the length of the metal bar excluding opposite ends thereof and fixing the insulators to each other using an adhesive 230 to manufacture an inter-module busbar.

Meanwhile, a process of manufacturing the inter-module busbar according to the second embodiment of the present invention is carried out by performing the fourth step of forming the outer insulation portion 220 immediately after the first step in the first embodiment and a step of injecting the extinguishing liquid 213 through the second injection portion 224 and performing sealing. In addition, the inter-module busbar may be manufactured through the fifth step described above.

The present invention has been described above with reference to specific embodiments. However, those skilled in the art to which the present invention pertains will appreciate that various applications and modifications are possible within the category of the present invention based on the above description and within the scope of the claims.

### (Description of Reference Symbols)

10, 100: Metal bars
20: Insulative tube
30A: Bandage member
200: Insulator
210: Inner insulation portion
211: First insulation layer
212: Second insulation layer
213: Extinguishing liquid
214: First injection portion
215: First injection hole
216: First sealing cap
220: Outer insulation portion
224: Second injection portion
225: Second injection hole
226: Second sealing cap
230: Adhesive
240: Crack
H: Bolt fastening hole
S: Extinguishing liquid injection space
B: Metal bar insertion space

## Claims

1. An inter-module busbar comprising:
a metal bar (100) made of an electrically conductive metal material; and
an insulator (200) located on a part of the metal bar (100) excluding opposite ends of the metal bar (100),
wherein the insulator (200) comprises:
an inner insulation portion (210) configured to surround the metal bar (100);
an outer insulation portion (220) configured to enclose an outer surface of the inner insulation portion (210) excluding a side surface of the inner insulation portion (210),
**characterised in that** the inter-module busbar comprises a fire-extinguishing liquid (213) that is included in the insulator (200),
and
wherein the inner insulation portion (210) is provided with a space (S) into which the fire-extinguishing liquid (213) is to be injected.

2. The inter-module busbar according to claim 1, wherein the insulator (200) is provided with a metal bar insertion hole (B), and
wherein one or more of the insulators (200) are fitted onto the metal bar (100) in a longitudinal direction of the metal bar (100).

3. The inter-module busbar according to claim 2, wherein a plurality of insulators (200) fitted on the metal bar (100) is fixed to each other by adhesion using an adhesive (230).

4. The inter-module busbar according to claim 1, wherein the space (S) into which the fire-extinguishing liquid (213) is to be injected is formed between a first insulation layer (211) in tight contact with the metal bar (100) and a second insulation layer (212) in tight contact with the outer insulation portion (220).

5. The inter-module busbar according to claim 4, wherein the space (S) into which the fire-extinguishing liquid (213) is to be injected surrounds an entirety of the metal bar (100).

6. The inter-module busbar according to claim 4, wherein the inner insulation portion (210) further comprises:
a first injection hole (215) configured to allow the fire-extinguishing liquid (213) to be injected therethrough; and
a first sealing cap (216) configured to seal the first injection hole (215).

7. The inter-module busbar according to claim 4, wherein the inner insulation portion (210) is provided with a first injection hole (215) configured to allow the fire-extinguishing liquid (213) to be injected therethrough,
wherein the outer insulation portion (220) further comprises a second injection hole (225) configured to communicate with the first injection hole (215), and
wherein the inter-module busbar further comprises a second sealing cap (226) configured to seal the first injection hole (215) and the second injection hole (225).

8. The inter-module busbar according to claim 4, wherein the first insulation layer (211) is thicker than the second insulation layer (212).

9. The inter-module busbar according to claim 1, wherein the outer insulation portion (220) is configured to enclose the outer surface of the inner insulation portion (210) including the side surface of the inner insulation portion (210).

10. The inter-module busbar according to claim 1, wherein the inner insulation portion (210) is made of an expandable heat-resistant silicone material.

11. The inter-module busbar according to claim 1, wherein the outer insulation portion (220) is made of a heat-resistant silicone material configured to be ceramized by heat.

12. The inter-module busbar according to claim 1, wherein the fire-extinguishing liquid (213) is an insulative material.

13. A battery pack comprising the inter-module busbar according to any one of claims 1 to 12.

## Patentansprüche

1. Zwischenmodulsammelschiene, umfassend:
eine Metallstange (100), welche aus einem elektrisch leitfähigen Metallmaterial hergestellt ist; und
einen Isolator (200), welcher an einem Teil der Metallstange (100) mit Ausnahme entgegengesetzter Enden der Metallstange (100) angeordnet ist,
wobei der Isolator (200) umfasst:
einen inneren Isolationsabschnitt (210), welcher dazu eingerichtet ist, die Metallstange (100) zu umgeben;
einen äußeren Isolationsabschnitt (220), welcher dazu eingerichtet ist, eine äußere Fläche des inneren Isolationsabschnitts (210) mit Ausnahme einer seitlichen Fläche des inneren Isolationsabschnitts (210) zu umschließen,
**dadurch gekennzeichnet, dass** die Zwischenmodulsammelschiene eine Feuerlöschflüssigkeit (213) umfasst, welche in dem Isolator (200) enthalten ist, und
wobei der innere Isolationsabschnitt (210) mit einem Raum (S) bereitgestellt ist, in welchen die Feuerlöschflüssigkeit (213) zu injizieren ist.

2. Zwischenmodulsammelschiene nach Anspruch 1, wobei der Isolator (200) mit einem Metallstangeneinführungsloch (B) bereitgestellt ist und
wobei einer oder mehrere der Isolatoren (200) in einer longitudinalen Richtung der Metallstange (100) an der Metallstange (100) angebracht sind.

3. Zwischenmodulsammelschiene nach Anspruch 2, wobei eine Mehrzahl von Isolatoren (200), welche an der Metallstange (100) angebracht sind, durch Adhäsion (230) unter Verwendung eines Klebstoffs aneinander befestigt ist.

4. Zwischenmodulsammelschiene nach Anspruch 1, wobei der Raum (S), in welchen die Feuerlöschflüssigkeit (213) zu injizieren ist, zwischen einer ersten Isolationsschicht (211) in engem Kontakt mit der Metallstange (100) und einer zweiten Isolationsschicht (212) in engem Kontakt mit dem äußeren Isolationsabschnitt (220) gebildet ist.

5. Zwischenmodulsammelschiene nach Anspruch 4, wobei der Raum (S), in welchen die Feuerlöschflüssigkeit (213) zu injizieren ist, eine Gesamtheit der Metallstange (100) umgibt.

6. Zwischenmodulsammelschiene nach Anspruch 4, wobei der innere Isolationsabschnitt (210) ferner umfasst:
ein erstes Injektionsloch (215), welches dazu eingerichtet ist, zu ermöglichen, dass die Feuerlöschflüssigkeit (213) dadurch injiziert wird; und
eine erste Dichtungskappe (216), welche dazu eingerichtet ist, das erste Injektionsloch (215) abzudichten.

7. Zwischenmodulsammelschiene nach Anspruch 4, wobei der innere Isolationsabschnitt (210) mit einem ersten Injektionsloch (215) bereitgestellt ist, welches dazu eingerichtet ist, zu ermöglichen, dass die Feuerlöschflüssigkeit (213) dadurch injiziert wird,
wobei der äußere Isolationsabschnitt (220) ferner ein zweites Injektionsloch (225) umfasst, welches dazu eingerichtet ist, mit dem ersten Injektionsloch (215) in Verbindung zu stehen, und
wobei die Zwischenmodulsammelschiene ferner eine zweite Dichtungskappe (226) umfasst, welche dazu eingerichtet ist, das erste Injektionsloch (215) und das zweite Injektionsloch (225) abzudichten.

8. Zwischenmodulsammelschiene nach Anspruch 4, wobei die erste Isolationsschicht (211) dicker ist als die zweite Isolationsschicht (212).

9. Zwischenmodulsammelschiene nach Anspruch 1, wobei der äußere Isolationsabschnitt (220) dazu eingerichtet ist, die äußere Fläche des inneren Isolationsabschnitts (210) einschließlich der seitlichen Fläche des inneren Isolationsabschnitts (210) zu umschließen.

10. Zwischenmodulsammelschiene nach Anspruch 1, wobei der innere Isolationsabschnitt (210) aus einem expandierbaren hitzebeständigen Silikonmaterial hergestellt ist.

11. Zwischenmodulsammelschiene nach Anspruch 1, wobei der äußere Isolationsabschnitt (220) aus einem hitzebeständigen Silikonmaterial hergestellt ist, welches dazu eingerichtet ist, durch Wärme keramisiert zu werden.

12. Zwischenmodulsammelschiene nach Anspruch 1, wobei die Feuerlöschflüssigkeit (213) ein isolierendes Material ist.

13. Batteriepack, umfassend die Zwischenmodulsammelschiene nach einem der Ansprüche 1 bis 12.

## Revendications

1. Barre omnibus intermodules comprenant :
une barre métallique (100) constituée d'un matériau métallique électriquement conducteur ; et
un isolant (200) situé sur une partie de la barre métallique (100) à l'exclusion des extrémités opposées de la barre métallique (100), l'isolant (200) comprenant :
une partie d'isolation interne (210) configurée pour entourer la barre métallique (100) ;
une partie d'isolation externe (220) configurée pour enfermer une surface externe de la partie d'isolation interne (210) à l'exclusion d'une surface latérale de la partie d'isolation interne (210),
**caractérisée en ce que** la barre omnibus intermodules comprend un liquide d'extinction d'incendie (213) qui est inclus dans l'isolant (200), et
dans laquelle la partie d'isolation interne (210) est pourvue d'un espace (S) dans lequel le liquide d'extinction d'incendie (213) doit être injecté.

2. Barre omnibus intermodules selon la revendication 1, dans laquelle l'isolant (200) est pourvu d'un trou d'insertion de barre métallique (B), et
dans laquelle un ou plusieurs des isolants (200) sont montés sur la barre métallique (100) dans une direction longitudinale de la barre métallique (100).

3. Barre omnibus intermodules selon la revendication 2, dans laquelle une pluralité d'isolants (200) montés sur la barre métallique (100) sont fixés les uns aux autres par adhésion à l'aide d'un adhésif (230).

4. Barre omnibus intermodules selon la revendication 1, dans laquelle l'espace (S) dans lequel le liquide d'extinction d'incendie (213) doit être injecté est formé entre une première couche d'isolation (211) en contact étroit avec la barre métallique (100) et une seconde couche d'isolation (212) en contact étroit avec la partie d'isolation externe (220).

5. Barre omnibus intermodules selon la revendication 4, dans laquelle l'espace (S) dans lequel le liquide d'extinction d'incendie (213) doit être injecté entoure une totalité de la barre métallique (100).

6. Barre omnibus intermodules selon la revendication 4, dans laquelle la partie d'isolation interne (210) comprend en outre :
un premier trou d'injection (215) configuré pour permettre l'injection du liquide d'extinction d'incendie (213) à travers celui-ci ; et
un premier capuchon d'étanchéité (216) configuré pour assurer l'étanchéité du premier trou d'injection (215).

7. Barre omnibus intermodules selon la revendication 4, dans laquelle la partie d'isolation interne (210) est pourvue d'un premier trou d'injection (215) configuré pour permettre l'injection du liquide d'extinction d'incendie (213) à travers celui-ci,
dans laquelle la partie d'isolation externe (220) comprend en outre un second trou d'injection (225) configuré pour communiquer avec le premier trou d'injection (215), et
dans laquelle la barre omnibus intermodules comprend en outre un second capuchon d'étanchéité (226) configuré pour assurer l'étanchéité du premier trou d'injection (215) et du second trou d'injection (225).

8. Barre omnibus intermodules selon la revendication 4, dans laquelle la première couche d'isolation (211) est plus épaisse que la seconde couche d'isolation (212).

9. Barre omnibus intermodules selon la revendication 1, dans laquelle la partie d'isolation externe (220) est configurée pour enfermer la surface externe de la partie d'isolation interne (210) incluant la surface latérale de la partie d'isolation interne (210).

10. Barre omnibus intermodules selon la revendication 1, dans laquelle la partie d'isolation interne (210) est constituée d'un matériau silicone extensible résistant à la chaleur.

11. Barre omnibus intermodules selon la revendication 1, dans laquelle la partie d'isolation externe (220) est constituée d'un matériau silicone résistant à la chaleur configuré pour être céramisé par chaleur.

12. Barre omnibus intermodules selon la revendication 1, dans laquelle le liquide d'extinction d'incendie (213) est un matériau isolant.

13. Bloc-batterie comprenant la barre omnibus intermodules selon l'une quelconque des revendications 1 à 12.
